# EUROPEAN PATENT APPLICATION

(11) **EP 4 166 357 A1**
(43) Date of publication of application: **19.04.2023**
(21) Application number: 21912322.1
(22) Date of filing: 27.08.2021
(51) Int. Cl.: B60C 23/04, B60C 23/00

(54) **WHEEL POSITION IDENTIFICATION SYSTEM, WHEEL POSITION IDENTIFICATION DEVICE, AND WHEEL POSITION IDENTIFICATION METHOD**

(71) Applicant: Pacific Industrial Co., Ltd., Ogaki-shi, Gifu 503-8603 (JP)
(72) Inventor: FUJII Keiyu, Ogaki-shi, Gifu 5038603 (JP)
(74) Representative: Daub, Thomas
(86) International application number: PCT/JP2021/031440
(87) International publication number: WO 2023/026455

(57) **Abstract**

A wheel position identifying system (50) includes a receiver (71) and transmitters (51), which are respectively provided in two wheel assemblies (32, 35) of a wheel assembly set (31). When each transmitter (51) detects that it is located at a specific position, the transmitters (51) transmit a wireless signal including an ID code. A receiver controlling device (72) of the receiver (71) obtains information indicating a rotation angle of the wheel assembly set (31) from a rotation angle detecting unit (41) of a vehicle (10), while associating the information with the ID code each time receiving the wireless signal from the transmitters (51). Based on a phase difference between rotation angles associated with different ID codes, the receiver controlling device (72) identifies whether each of the transmitters (51) is provided in a right wheel assembly (32) or a left wheel assembly (35).

## Description

### TECHNICAL FIELD

The present disclosure relates to a wheel position identifying system, a wheel position identifying device, and a wheel position identifying method.

### BACKGROUND ART

Patent Literature 1 discloses a vehicle equipped with a wheel position identifying system. The vehicle includes wheel assemblies and rotation angle detecting devices. Each wheel assembly includes a wheel and a tire attached to the wheel. The rotation angle detecting device detects a rotation angle of the wheel assembly. The wheel position identifying system includes transmitters and a receiver. Each wheel is equipped with one of the transmitters. Each transmitter transmits a wireless signal when the transmitter is located at a specific position in the rotation direction. When receiving the wireless signal, the receiver obtains a detection result of the rotation angle detecting device. The receiver identifies the wheel assembly to which each transmitter is attached based on variations of the rotation angles of the wheel assemblies at the time when the wireless signals are received.

### CITATION LIST

### Patent Literature

Patent Literature 1: Japanese Laid-Open Patent Publication No. 2014-227124

### SUMMARY OF INVENTION

### Technical Problem

Some vehicles are equipped with sets of wheel assemblies. A wheel assembly set includes two wheel assemblies. The two wheel assemblies in a wheel assembly set are attached to either end of an axle. In this case, it is desired to identify the wheel assemblies in which the respective transmitters are provided in the wheel assembly set.

### Solution to Problem

In a first aspect of the present disclosure, a wheel position identifying system includes transmitters respectively provided in two wheel assemblies in a wheel assembly set of a vehicle, and a wheel position identifying device that is configured to identify whether each of the transmitters is provided in a right wheel assembly or a left wheel assembly of the two wheel assemblies. Each of the transmitters includes an acceleration sensor that includes a detection axis and is configured to detect an acceleration in a direction along the detection axis, a transmitter memory unit that is configured to store an ID code, a transmission circuit that is configured to transmit a wireless signal containing the ID code to the wheel position identifying device, and a transmitter controlling device that is configured to cause the transmission circuit to transmit the wireless signal when detecting that the transmitter is located at a specific position in a rotation direction of the wheel assembly based on a detection result of the acceleration sensor. When the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction. The wheel position identifying device includes a reception circuit that is configured to receive the wireless signals, and a receiver controlling device. The receiver controlling device is configured such that each time the reception circuit receives the wireless signal, the receiver controlling device obtains information indicating a rotation angle of the wheel assembly set from a rotation angle detecting unit of the vehicle, while associating the information with the ID code included in the received wireless signal. The receiver controlling device is also configured such that the receiver controlling device identifies whether each of the transmitters is provided in the right wheel assembly or the left wheel assembly based on a phase difference between the rotation angles associated with the ID codes that are different from each other.

When the transmitter provided in the right wheel assembly and the transmitter provided in the left wheel assembly are located at the same position in the rotation direction of the wheel assemblies, the detection axis of the transmitter provided in the right wheel assembly and the detection axis of the transmitter of the left wheel assembly are separated from each other. When each transmitter transmits a wireless signal at the specific position based on a detection result of the acceleration sensor, the specific position at which the transmitter provided in the right wheel assembly transmits the wireless signal is displaced from the specific position at which the transmitter provided in the left wheel assembly transmits the wireless signal. The receiver controlling device obtains information indicating the rotation angle of the wheel assembly set from the rotation angle detecting unit each time the reception circuit receives a wireless signal. Due to the displacement of the specific positions, rotation angles of different phases are obtained. The phase difference allows the receiver controlling device to identify whether each transmitter is provided in the right wheel assembly or the left wheel assembly.

In the above-described wheel position identifying system, the transmitter provided in the right wheel assembly and the transmitter provided in the left wheel assembly are preferably inverted with respect to a left-right direction of the vehicle.

In a second aspect of the present disclosure, a wheel position identifying device for a vehicle is provided. The vehicle includes a wheel assembly set that includes two wheel assemblies. Each of the two wheel assemblies is provided with a transmitter. The wheel position identifying device is configured to identify whether each of the transmitters is provided in a right wheel assembly or a left wheel assembly of the two wheel assemblies. Each of the transmitters includes an acceleration sensor that is configured to detect an acceleration in a direction along a detection axis. When the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction. The wheel position identifying device includes a reception circuit and a receiver controlling device. The reception circuit is configured to receive wireless signals. The wireless signals are transmitted from the transmitters and including ID codes. The receiver controlling device is configured such that each time receiving the wireless signal that is transmitted from each transmitter when the transmitter detects that the transmitter is located at a specific position in a rotation direction of the wheel assembly, the receiver controlling device obtains information indicating a rotation angle of the wheel assembly set from a rotation angle detecting unit of the vehicle, while associating the information with the ID code included in the received wireless signal. The receiver controlling device is also configured such that the receiver controlling device identifies whether each of the transmitters is provided in the right wheel assembly or the left wheel assembly based on a phase difference between the rotation angles associated with the ID codes that are different from each other.

The phase difference between the rotation angles in the wheel assembly set allows the receiver controlling device to identify whether each transmitter is provided in the right wheel assembly or the left wheel assembly.

In a third aspect of the present disclosure, a wheel position identifying method for a vehicle is provided. The vehicle includes a wheel assembly set that includes two wheel assemblies. Each of the two wheel assemblies is provided with a transmitter. The wheel position identifying method identifies whether each of the transmitters is provided in a right wheel assembly or a left wheel assembly of the two wheel assemblies. The method includes: providing each of the transmitters with an acceleration sensor that is configured to detect an acceleration in a direction along a detection axis; arranging the transmitters in the two wheel assemblies, respectively, such that, when the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction; when the transmitter detects that the transmitter is located at a specific position in a rotation direction of the wheel assembly, causing the transmitter to transmit a wireless signal including the ID code; receiving the wireless signal; each time receiving the wireless signal, obtaining information indicating a rotation angle of the wheel assembly set from a rotation angle detecting unit of the vehicle, while associating the information with the ID code included in the received wireless signal; and identifying whether each of the transmitters is provided in the right wheel assembly or the left wheel assembly based on a phase difference between the rotation angles associated with the ID codes that are different from each other.

Based on the phase difference between the rotation angles in the wheel assembly set, the wheel position identifying method is capable of identifying whether each transmitter is provided in the right wheel assembly or the left wheel assembly.

### BRIEF DESCRIPTION OF DRAWINGS

Fig. 1 is a schematic diagram showing a configuration of a vehicle.
Fig. 2 is a schematic diagram showing a transmitter mounted on each wheel shown in Fig. 1.
Fig. 3 is a diagram schematically showing a detection axis of an acceleration sensor provided in each wheel shown in Fig. 1.
Fig. 4 is a flowchart showing a procedure in which the transmitter shown in Fig. 2 executes a specific position transmission process.
Fig. 5 is a diagram schematically showing a positional relationship between two transmitters provided in each wheel assembly set shown in Fig. 1.
Fig. 6 is a diagram schematically showing the rotational position of a right wheel when the detection axis of a first transmitter shown in Fig. 5 is oriented vertically upward.
Fig. 7 is a diagram schematically showing the rotational position of a left wheel when the detection axis of a second transmitter shown in Fig. 5 is oriented vertically upward.
Fig. 8 is a diagram showing a correspondence relationship between the rotational position of the wheel shown in Fig. 5 and a gravitational acceleration detected by the acceleration sensor.
Fig. 9 is a flowchart of a wheel position identifying process executed by the receiver controlling device shown in Fig. 1.
Fig. 10 is a diagram showing a distribution of rotation angles of a wheel obtained by executing the wheel position identifying process shown in Fig. 9.

### DESCRIPTION OF EMBODIMENTS

A wheel position identifying system, a wheel position identifying device, and a wheel position identifying method according to one embodiment will now be described.

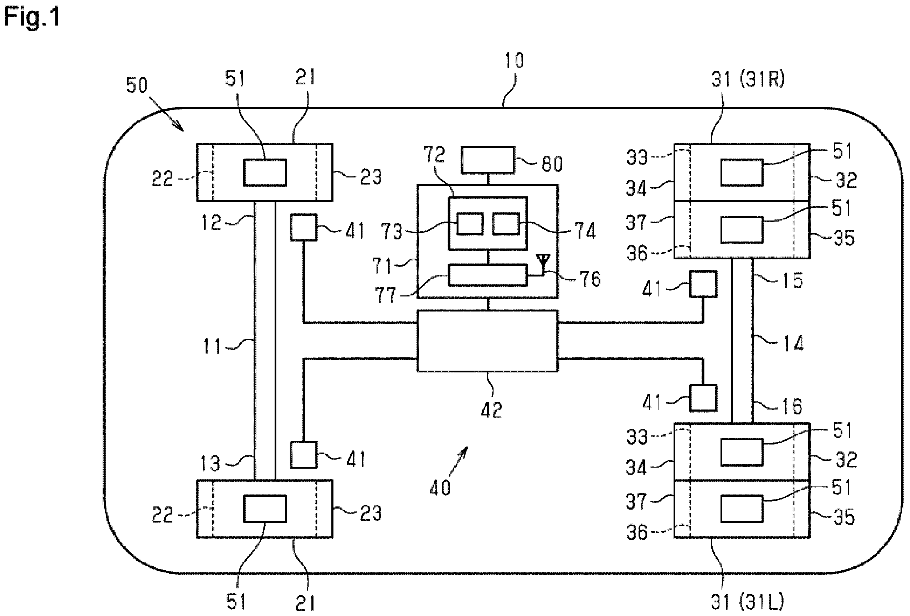

As shown in Fig. 1, a vehicle 10 includes axles 11, 14, wheel assemblies 21, wheel assembly sets 31, an ABS 40, and a display unit 80. In the following description, directional terms such as front, rear, left, and right are defined with reference to the vehicle 10.

The number of the axles 11, 14 is two. The two axles 11, 14 are arranged in a front-rear direction. The two axles 11, 14 are respectively referred to as a first axle 11 and a second axle 14. The first axle 11 is located forward of the second axle 14. Positions at opposite ends of the first axle 11 will be respectively referred to as a first position 12 and a second position 13. The first position 12 is a position at the right end of the first axle 11. The second position 13 is a position at the left end of the first axle 11. Positions at opposite ends of the second axle 14 will be respectively referred to as a third position 15 and a fourth position 16. The third position 15 is a position at the right end of the second axle 14. The fourth position 16 is a position at the left end of the second axle 14.

Each wheel assembly 21 includes a wheel 22 and a tire 23, which is attached to the wheel 22. Each of the first position 12 and the second position 13 is provided with one of the wheel assemblies 21. The wheel assemblies 21 has a single-tire structure. The single-tire structure refers to a structure in which a single wheel assembly 21 is attached to either end of the first axle 11.

Each wheel assembly set 31 includes two wheel assemblies 32, 35. The two wheel assemblies 32, 35 include a right wheel assembly 32 and a left wheel assembly 35. The right wheel assembly 32 is located on the right side of the left wheel assembly 35. The right wheel assembly 32 includes a wheel 33 and a tire 34, which is attached to the wheel 33. For illustrative purposes, the wheel 33 of the right wheel assembly 32 will be referred to as a right wheel 33, and the tire 34 attached to the right wheel 33 will be referred to as a right tire 34. The left wheel assembly 35 includes a wheel 36 and a tire 37, which is attached to the wheel 36. For illustrative purposes, the wheel 36 of the left wheel assembly 35 will be referred to as a left wheel 36, and the tire 37 attached to the left wheel 36 will be referred to as a left tire 37. The left wheel 36 is located on the left side of the right wheel 33. Each of the third position 15 and the fourth position 16 is provided with one of the wheel assembly sets 31. Each wheel assembly set 31 has a double-tire structure. The double-tire structure refers to a structure in which two wheel assemblies 32, 35 are attached to either end of the axle 11, 14.

The wheel assembly set 31 located at the third position 15 will be referred to as a right wheel assembly set 31R. The wheel assembly set 31 located at the fourth position 16 will be referred to as a left wheel assembly set 31L. The right wheel assembly set 31R is located on the right side of the left wheel assembly set 31L. The right wheel 33 of the right wheel assembly set 31R is an outer wheel. The left wheel 36 of the right wheel assembly set 31R is an inner wheel. The right wheel 33 of the left wheel assembly set 31L is an inner wheel. The left wheel 36 of the left wheel assembly set 31L is an outer wheel. An inner wheel is a wheel that is located on the inner side of an outer wheel in the vehicle width direction.

The ABS 40 is an antilock braking system. The ABS 40 includes rotation angle detecting units 41 and an ABS controller 42. The rotation angle detecting units 41 are respectively located at the first position 12 to the fourth position 16. Each of the wheel assemblies 21 and the wheel assembly sets 31 is provided with one of the rotation angle detecting units 41. The rotation angle detecting units 41 are respectively arranged to face gears that are provided to rotate integrally with the wheel assemblies 21 and the wheel assembly sets 31. When the gear rotates, the rotation angle detecting unit 41 generates pulses. While any of the wheel assemblies 21 and the wheel assembly sets 31 rotates one turn, the corresponding rotation angle detecting unit 41 generates pulses of which the number corresponds to the number of teeth of the gear.

The ABS controller 42 includes, for example, a microcomputer. The ABS controller 42 counts pulses of each rotation angle detecting unit 41. The ABS controller 42 counts rising edges and falling edges of the pulses. The ABS controller 42 calculates, as a pulse count value, the remainder when the counted number of pulses is divided by the number of pulses per rotation of the gear. The degree of rotation of the gear per pulse count value is obtained by dividing 360 degrees by the number of pulses generated while the gear rotates one turn. In this manner, the rotation angle of each wheel assembly 21 and each wheel assembly set 31 is obtained from the pulse count value. The pulse count value is information that indicates the rotation angle of each wheel assembly 21 and each wheel assembly set 31. The rotation angles of the wheel assemblies 21 and the wheel assembly sets 31 can be regarded as the rotation angles of the wheels 22, 33, 36. In the same wheel assembly set 31, the rotation angles of the right wheel 33 and the left wheel 36 are equal to each other. The pulse count value is from 0 to 95 in the present embodiment.

The vehicle 10 includes a wheel position identifying system 50. The wheel position identifying system 50 includes transmitters 51 and a receiver 71. The transmitters 51 are respectively provided in the wheel assemblies 21, 32, 35. The transmitters 51 are integrally provided, for example, in tire valves to be attached to the wheels 22, 33, 36. The transmitter 51 provided in the right wheel 33 can be regarded as being provided in the right wheel assembly 32. The transmitter 51 provided in the left wheel 36 can be regarded as being provided in the left wheel assembly 35.

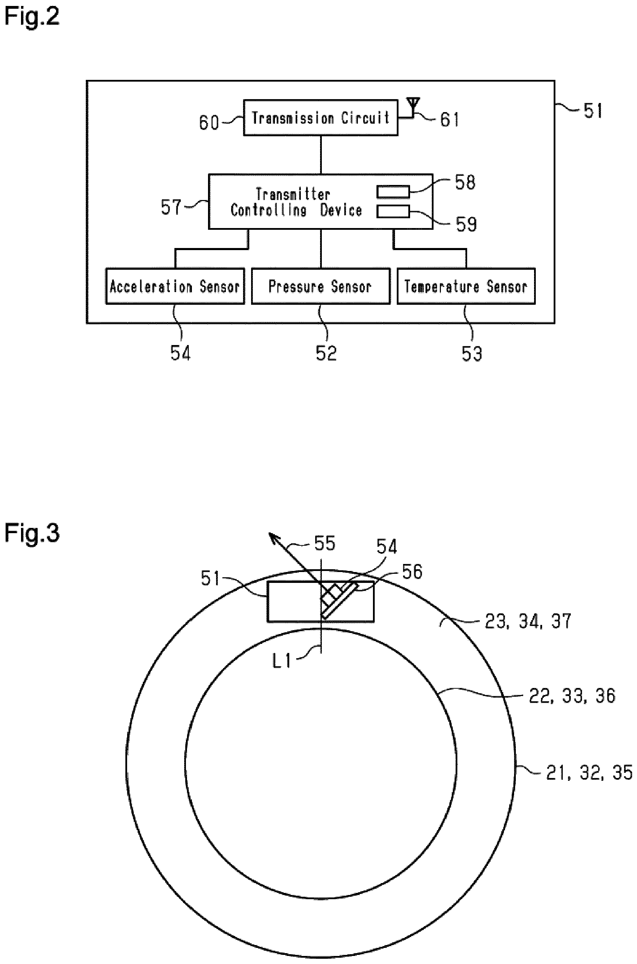

As shown in Fig. 2, each transmitter 51 includes a pressure sensor 52, a temperature sensor 53, an acceleration sensor 54, a transmitter controlling device 57, a transmission circuit 60, and a transmission antenna 61.

The pressure sensor 52 detects the pressure of the corresponding one of the tires 23, 34, 37. The temperature sensor 53 detects the temperature inside the corresponding one of the tires 23, 34, 37.

As shown in Fig. 3, the transmitter 51 includes a circuit board 56. The pressure sensor 52, the temperature sensor 53, the acceleration sensor 54, the transmitter controlling device 57, and the transmission circuit 60 are mounted on the circuit board 56. The acceleration sensor 54 has a detection axis 55. The acceleration sensor 54 detects an acceleration in a direction along the detection axis 55. The detection axis 55 is provided to be orthogonal to the circuit board 56. The rotational position of each of the wheels 22, 33, 36 when the transmitter 51 is located at the highest position is defined as 0°. When the rotational position of the wheel 22, 33, 36 is 0°, the circuit board 56 is inclined in the rotation direction of the wheel 22, 33, 36 with respect to an imaginary line segment L1, which extends vertically. The rotational position of the wheel 22, 33, 36 can be regarded as the rotational position of the wheel assembly 21, 32, 35.

As shown in Fig. 2, the transmitter controlling device 57 includes a processor 58 and a transmitter memory unit 59. The processor 58 may be a micro processing unit (MPU), a central processing unit (CPU), or a digital signal processor (DSP). The transmitter memory unit 59 includes a random-access memory (RAM) and a read-only memory (ROM). The transmitter memory unit 59 stores program codes or commands configured to cause the processor 58 to execute processes. The transmitter controlling device 57 may include a hardware circuit such as an ASIC and an FPGA. The transmitter controlling device 57, which is processing circuitry, may include one or more processors that operate according to a computer program, one or more hardware circuits such as an ASIC and an FPGA, or a combination thereof. The ROM and the RAM, which are computer-readable media, include any type of media that are accessible by general-purpose computers and dedicated computers. The transmitter memory unit 59 stores an ID code indicating individual identification information of the corresponding transmitters 51.

The transmitter controlling device 57 generates transmission data. The transmission data is digital data and is data of binary numbers. The transmission data includes pressure data, temperature data, and an ID code. The pressure data is data indicating the pressure detected by the pressure sensor 52. The temperature data is data indicating the temperature detected by the temperature sensor 53. The transmitter controlling device 57 delivers transmission data to the transmission circuit 60.

The transmission circuit 60 transmits a wireless signal, which has been modulated in accordance with the transmission data from the transmitter controlling device 57, from the transmission antenna 61. This causes the transmission circuit 60 to transmit a wireless signal including the ID code. The wireless signal is a signal of a predetermined frequency band. The frequency band may be an LF band, an MF band, an HF band, a VHF band, a UHF band, and a 2.4 GHz band. The transmitter controlling device 57 executes a steady-state transmission process and a specific position transmission process. In the steady-state transmission process, wireless signals are transmitted from the transmission circuit 60 at predetermined intervals.

The specific position transmission process is executed when the vehicle 10 starts traveling after the vehicle 10 has been in a stopped state for a predetermined period of time. The predetermined period of time is set to, for example, several tens of minutes to several hours. Whether the vehicle 10 is traveling can be determined based on acceleration detected by the acceleration sensor 54. The centrifugal acceleration acting on the acceleration sensor 54 increases as the vehicle speed increases. If the acceleration detected by the acceleration sensor 54 is greater than or equal to a travel determination threshold, the transmitter controlling device 57 determines that the vehicle 10 is traveling. If the acceleration detected by the acceleration sensor 54 is lower than the travel determination threshold, the transmitter controlling device 57 determines that the vehicle 10 is in a stopped state. The travel determination threshold is set to a value greater than the acceleration detected by the acceleration sensor 54 when the vehicle 10 is in a stopped state, while taking factors such as tolerances into consideration. A process executed by the transmitter controlling device 57 when executing the specific position transmission process will now be described.

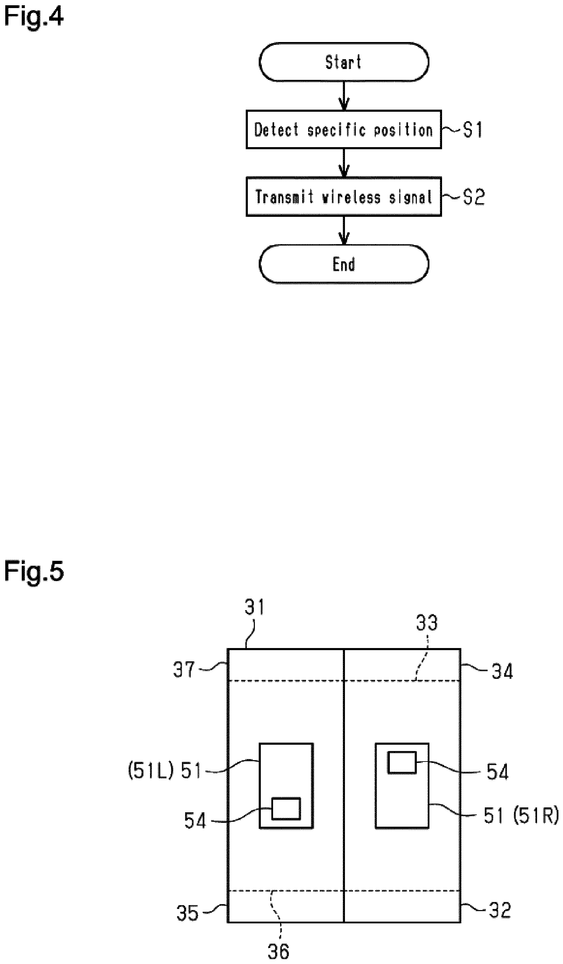

As shown in Fig. 4, in step S1, the transmitter controlling device 57 detects that the transmitter 51 is located at a specific position in the rotation direction of the wheel 22, 33, 36. More specifically, the transmitter controlling device 57 detects that a predetermined time has elapsed from the preceding transmission of a wireless signal and that the transmitter 51 is located at the specific position. The rotation direction of the wheel 22, 33, 36 can be regarded as the rotation direction of the wheel assembly 21, 32, 35. It is possible to detect that the transmitter 51 is at the specific position based on the acceleration detected by the acceleration sensor 54. A centrifugal acceleration and a gravitational acceleration act on the detection axis 55. The gravitational acceleration always acts downward in the vertical direction. The orientation of the detection axis 55 changes as the wheel 22, 33, 36 rotates. Thus, a gravitational acceleration component detected by the acceleration sensor 54 varies as the wheel 22, 33, 36 rotates. Unless the vehicle 10 is abruptly accelerated or abruptly stopped, the centrifugal acceleration changes only slightly during one turn of the wheel 22, 33, 36. Therefore, changes in the acceleration detected by the acceleration sensor 54 during one turn of the wheel 22, 33, 36 can be substantially regarded as changes in the gravitational acceleration component due to changes in the orientation of the detection axis 55.

When only the gravitational acceleration is considered, the gravitational acceleration component detected by the acceleration sensor 54 changes in a range between +1 [G] and -1 [G] in one rotation of the wheel 22, 33, 36. The gravitational acceleration component detected when the detection axis 55 is oriented vertically downward is +1 [G]. The gravitational acceleration component detected when the detection axis 55 is oriented vertically upward, which is the direction opposite to the vertically downward direction, is -1 [G]. When rotation of the wheel 22, 33, 36 changes the position of the acceleration sensor 54, such that the detection axis 55 passes the position of the vertically upward orientation, the acceleration detected by the acceleration sensor 54 is switched from decreasing to increasing. Specifically, when the position of the acceleration sensor 54 changes from a position at which the detection axis 55 is oriented vertically downward to a position at which the detection axis 55 is oriented vertically upward, the acceleration detected by the acceleration sensor 54 decreases. In contrast, when the position of the acceleration sensor 54 changes from a position at which the detection axis 55 is oriented vertically upward to a position at which the detection axis 55 is oriented vertically downward, the acceleration detected by the acceleration sensor 54 increases. The transmitter controlling device 57 obtains the detection result of the acceleration sensor 54 at predetermined intervals. Each time the detection result of the acceleration sensor 54 is obtained, the transmitter controlling device 57 compares the obtained detection with the preceding value. A case in which the detection result of the acceleration sensor 54 has increased from the preceding value is defined as increase, and a case in which the detection result of the acceleration sensor 54 has decreased from the preceding value is defined as a decrease. When a pattern of decrease and increase agrees with a specified pattern, the transmitter controlling device 57 determines that the transmitter 51 is located at the specific position at the wheel 22, 33, 36. For example, when the detection result of the acceleration sensor 54 starts increasing after decreasing, the transmitter controlling device 57 determines that the transmitters 51 is at the specific position. Accordingly, the transmitter controlling device 57 detects that the transmitters 51 is at the specific position. The specific position in the rotation direction of the wheel 22, 33, 36 can be regarded as a specific position in the rotation direction of the wheel assembly 21, 32, 35.

Next, in step S2, the transmitter controlling device 57 transmits a wireless signal from the transmission circuit 60. In this manner, the use of the acceleration sensor 54 allows the transmitter controlling device 57 to transmit a wireless signal from the transmission circuit 60 when detecting that the transmitter 51 is at the specific position in the wheel 22, 33, 36. The specific position in the present embodiment is a position at which the detection axis 55 is oriented vertically upward. The specific position corresponds to a predetermined range that allows a margin of error. Due to various factors, the position of the transmitter 51 when the transmitter controlling device 57 detects the specific position typically has errors. Various factors include the frequency at which the transmitter controlling device 57 obtains the detection result of the acceleration sensor 54 and detection errors of the acceleration sensor 54. The specific position permits these errors. The specific position can be regarded as a specific range that includes permissible range permitting errors.

As shown in Fig. 5, the transmitter 51 provided in the right wheel 33 of the wheel assembly set 31 will be referred to as a first transmitter 51R, and the transmitter 51 provided in the left wheel 36 will be referred to as a second transmitter 51L. The first transmitter 51R and the second transmitter 51L are arranged at the same position in the rotation direction of the wheel assembly set 31. That is, the first transmitter 51R and the second transmitter 51L are arranged side by side in the left-right direction. When the first transmitter 51R is at the highest position in the right wheel 33, the second transmitter 51L is at the highest position in the left wheel 36.

The first transmitter 51R and the second transmitter 51L are inverted with respect to the left-right direction. Specifically, the first transmitter 51R and the second transmitter 51L are arranged to be rotated by 180° with respect to each other about axes orthogonal to the circuit boards 56.

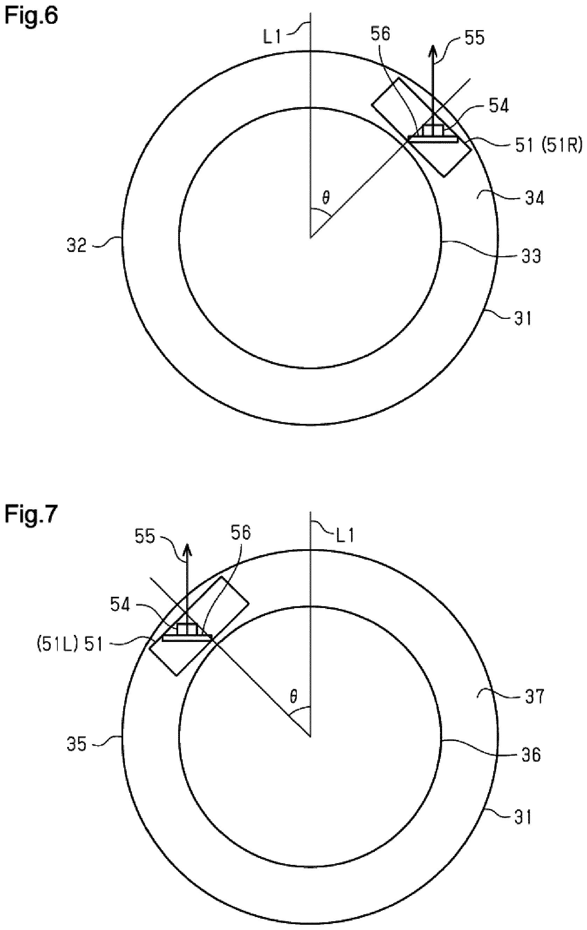

The rotational positions of the wheels 33, 36 when the detection axes 55 are oriented vertically upward as shown in Figs. 6 and 7 are different from each other between the wheel 33, which is provided with the first transmitter 51R, and the wheel 36, which is provided with the second transmitter 51L. The rotational positions of the wheels 33, 36 when the detection axes 55 are oriented vertically upward are displaced from 0° by a deviation angle θ. The deviation angle θ can be regarded as an angle defined by the line segment L1 and an imaginary line segment that extends from the rotation center of the wheels 33, 36 toward the transmitter 51. The detection axis 55 of the first transmitter 51R and the detection axis 55 of the second transmitter 51L are displaced in opposite directions from the rotational position of 0° in the rotation direction of the wheels 33, 36. Thus, the rotational position of the wheel 33 when the detection axis 55 of the first transmitter 51R is oriented vertically upward and the rotational position of the wheel 36 when the detection axis 55 of the second transmitter 51L is oriented vertically upward are displaced from each other by double the deviation angle θ. The rotational positions of the wheels 33, 36 when wireless signals are transmitted due to detection of the specific positions are displaced from each other such that the first transmitter 51R and the second transmitter 51L are separated from each other by 2θ.

When the first transmitter 51R and the second transmitter 51L are located at the same position in the rotation direction of the wheels 33, 36, the detection axis 55 of the first transmitter 51R and the detection axis 55 of the second transmitter 51L are separated from each other by 2θ in the rotation direction of the wheels 33, 36. In other words, when the first transmitter 51R and the second transmitter 51L are located at the same position in the rotation direction of the wheels 33, 36, the angle defined by the detection axis 55 of the first transmitter 51R and the detection axis 55 of the second transmitter 51L is 2θ. For example, when the first transmitter 51R and the second transmitter 51L are both located at the highest positions in the wheels 33, 36, the detection axis 55 of the first transmitter 51R and the detection axis 55 of the second transmitter 51L are separated from each other by 2θ in the rotation direction of the wheels 33, 36. The first transmitter 51R and the second transmitter 51L are arranged such that, when the first transmitter 51R and the second transmitter 51L are located at the same position in the rotation direction of the wheels 33, 36, the detection axis 55 of the first transmitter 51R and the detection axis 55 of the second transmitter 51L are not parallel with each other.

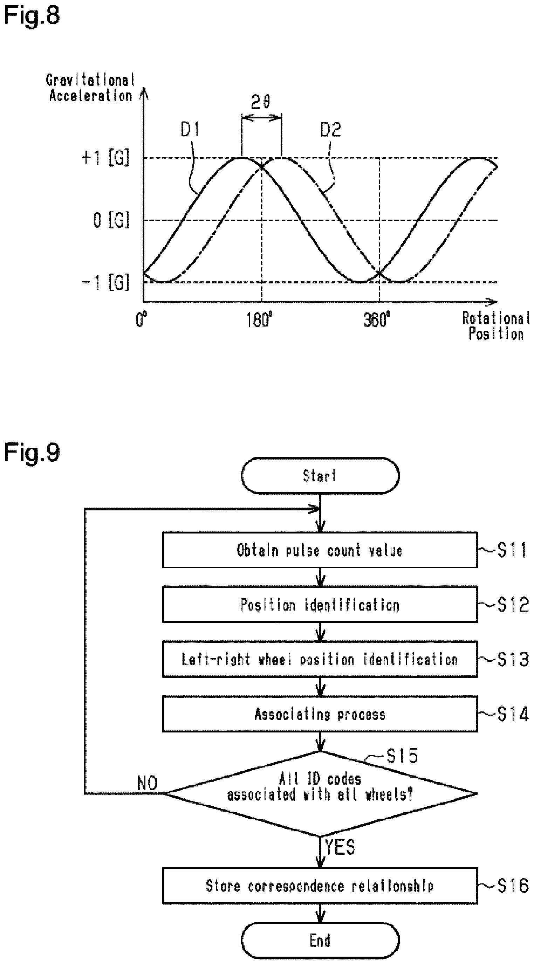

As shown in Fig. 8, a gravitational acceleration detected by the acceleration sensor 54 of the first transmitter 51R will be referred to as a first detected value D1, and a gravitational acceleration detected by the acceleration sensor 54 of the second transmitter 51L will be referred to as a second detected value D2. The first detected value D1 and the second detected value D2 change along sine waves as the wheels 33, 36 rotate. The deviation angle θ of each detection axis 55 creates a phase difference of 2θ between the first detected value D1 and the second detected value D2. In the present embodiment, the phase of the first detected value D1 is advanced from the phase of the second detected value D2 by 2θ.

As shown in Fig. 1, the receiver 71 includes a receiver controlling device 72, a reception antenna 76, and a reception circuit 77. The receiver 71 is mounted on the vehicle 10.

The receiver controlling device 72 includes a processor 73 and a memory unit 74. The processor 73 may be, for example, an MPU, a CPU, or a DSP. The memory unit 74 includes a nonvolatile memory medium that can be rewritten, a ROM, and a RAM. The memory unit 74 stores program codes or commands configured to cause the processor 73 to execute processes. The receiver controlling device 72 may include a hardware circuit such as an ASIC and an FPGA. The receiver controlling device 72, which is processing circuitry, may include one or more processors that operate according to a computer program, one or more hardware circuits such as an ASIC and an FPGA, or a combination thereof. The ROM and the RAM, which are computer-readable media, include any type of media that are accessible by general-purpose computers and dedicated computers. The receiver controlling device 72 is configured to obtain pulse count values from the ABS controller 42.

The reception antenna 76 receives wireless signals transmitted from the transmitters 51. The reception circuit 77 demodulates the wireless signals received through the reception antenna 76 to obtain transmission data. The reception circuit 77 outputs the transmission data to the receiver controlling device 72. The receiver controlling device 72 thus obtains pressure data, temperature data, and ID codes. When there is an anomaly in any of the tires 23, 34, 37, the receiver controlling device 72 performs a notification using the display unit 80. The display unit 80 is located in the view of occupants of the vehicle 10.

The receiver controlling device 72 executes a wheel position identifying process. The wheel position identifying process is a process for associating the respective wheels 22, 33, 36 with the ID codes of the respective transmitters 51. Associating the respective wheels 22, 33, 36 with the ID codes of the respective the transmitters 51 can be regarded as associating the respective wheel assemblies 21, 32, 35 with the ID codes of the respective transmitters 51. Associating the respective wheels 22, 33, 36 with the ID codes of the respective the transmitters 51 can be regarded as identifying in which one of the six wheels 22, 33, 36 each of the six transmitters 51 is provided. Associating the respective wheels 22, 33, 36 with the ID codes of the respective transmitters 51 allows the receiver controlling device 72 to display, on the display unit 80, the pressures of the tires 23, 34, 37 in association with the positions of the wheels 22, 33, 36. Also, when an anomaly occurs in any of the tires 23, 34, 37, the receiver controlling device 72 can display, on the display unit 80, the position of the tire 23, 34, 37 in which the anomaly has occurred. The wheel position identifying process is executed, for example, when the vehicle 10 is switched from a stopped state to an activated state through an operation of a start switch. The start switch is also referred to as an ignition switch. Hereinafter, wireless signals are assumed to be transmitted through the specific position transmission process.

As shown in Fig. 9, each time the reception circuit 77 receives a wireless signal in step S11, the receiver controlling device 72 obtains the pulse count value of each rotation angle detecting unit 41 from the ABS controller 42. Accordingly, each time wireless signals from the six transmitters 51 are received, the pulse count values of the four rotation angle detecting units 41 are obtained.

Next, in step S12, the receiver controlling device 72 performs position identification. The position identification is a process that identifies at which of the first position 12 to the fourth position 16 each of the six transmitters 51 is provided. In other words, the position identification is a process of determining to which of the two wheel assemblies 21 and the two wheel assembly sets 31 each of the six transmitters 51 is attached.

The position identification is performed by obtaining the pulse count value each time a wireless signal is received. The rotation speeds of the wheel assemblies 21 and the wheel assembly sets 31 differ, for example, due to the influence of a differential gear. Thus, the relative positions of the transmitters 51 change as the vehicle 10 travels. In a case in which the transmitters 51 transmit wireless signals at the specific positions, and pulse count values are obtained upon reception of the wireless signals, one of the rotation angle detecting units 41 has a small variation of the pulse count value in correspondence with each transmitter 51. Based on variations of the pulse count values, which are collected each time a wireless signal is obtained, it is possible to identify at which of the first position 12 to the fourth position 16 each of the six transmitters 51 is provided. In other words, the ID codes of the six transmitters 51 can be associated with the first position 12 to the fourth position 16.

Next, in step S13, the receiver controlling device 72 performs left-right wheel position identification. The position identification identifies at which of the first position 12 to the fourth position 16 each of the six transmitters 51 is provided. Since the wheel assemblies 21 of a single-tire structure are attached to the first position 12 and the second position 13, one ID code is associated with each of the first position 12 and the second position 13. The wheel assembly sets 31 of a double-tire structure are attached to the third position 15 and the fourth position 16. Each wheel assembly set 31 includes two transmitters 51. Accordingly, two ID codes are associated with each of the third position 15 and the fourth position 16. The receiver controlling device 72 associates the two ID codes, which have been associated with the respective wheel assembly sets 31 through the left-right wheel position identification, with the right wheel 33 and the left wheel 36, respectively. The left-right wheel position identification is performed based on a phase difference of the pulse count values.

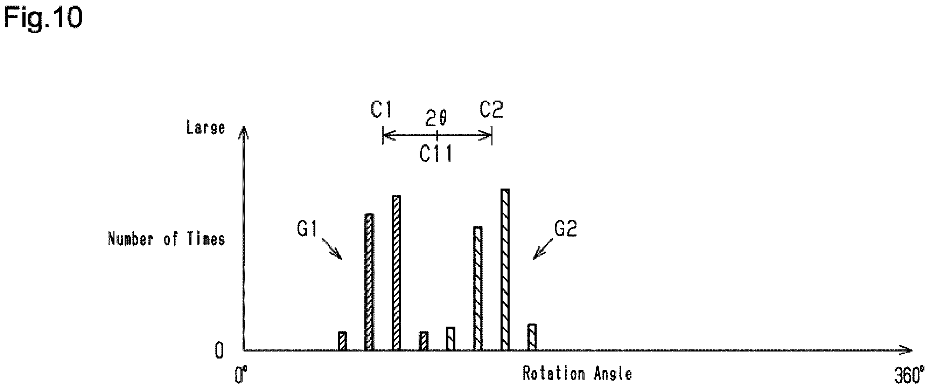

With reference to Fig. 10, a case will now be discussed in which a distribution of the rotation angles of each wheel assembly set 31 are obtained for the two ID codes associated with the wheel assembly set 31. The rotation angle of the wheel assembly set 31 corresponds to the pulse count value. Thus, the horizontal axis of the Fig. 10 may represent the pulse count value. The distribution represents a correspondence relationship between the rotation angle of the wheel assembly set 31 and the numbers of times the rotation angles are obtained. The distribution is bimodal. That is, the distribution includes two groups G1, G2 each having a peak. The groups G1, G2 represent numbers of times the transmitters 51 transmitted wireless signals at respective rotation angles of the wheel assembly set 31. The groups G1, G2 correspond to the ID code of the first transmitter 51R and the ID code of the second transmitter 51L. The phase difference between centers C1, C2 of the two groups G1, G2 is 2θ. The receiver controlling device 72 determines whether the phase of each of the groups G1, G2 is advancing or retarding with respect to a median C11 of the centers C1, C2. In the present embodiment, the phase of the detection result of the acceleration sensor 54 provided in the right wheel 33 is advanced in relation to the phase of the detection result of the acceleration sensor 54 provided in the left wheel 36. The receiver controlling device 72 determines that the ID code associated with one of the two groups G1, G2 of which the phase is advanced belongs to the transmitter 51 provided in the right wheel 33. The receiver controlling device 72 determines that the ID code associated with one of the two groups G1, G2 of which the phase is retarded belongs to the transmitter 51 provided in the left wheel 36. Based on the phase difference between the rotation angles associated with different ID codes, the receiver controlling device 72 identifies whether each of the two transmitters 51 in the wheel assembly set 31 is provided in the right wheel assembly 32 or the left wheel assembly 35.

Next, in step S14, the receiver controlling device 72 associates the wheels 22, 33, 36 with the ID codes based on the result of the left-right wheel position identification as shown in Fig. 9. The wheels 22 and the ID codes are associated with each other through the position identification. Two ID codes and the right wheel assembly set 31R are associated with each other through the position identification. The two ID codes that have been associated with the right wheel assembly set 31R are respectively associated with the right wheel 33 and the left wheel 36 through the left-right wheel position identification. Since the right wheel 33 of the right wheel assembly set 31R is an outer wheel, and the left wheel 36 of the right wheel assembly set 31R is an inner wheel, the two ID codes are regarded as being respectively associated with the outer wheel and the inner wheel through the position identification and the left-right wheel position identification. Likewise, the two ID codes that have been associated with the left wheel assembly set 31L are respectively associated with the right wheel 33 and the left wheel 36 through the left-right wheel position identification.

Next, in step S15, the receiver controlling device 72 determines whether all the ID codes have been associated with all the wheels 22, 33, 36. If the determination result of step S15 is affirmative, the receiver controlling device 72 executes the process of step S16. If the determination result of step S15 is negative, the receiver controlling device 72 returns to executes the process of step S11. That is, the wheel position identifying process is repeated until all the ID codes are associated with all the wheels 22, 33, 36.

In step S16, the receiver controlling device 72 stores the correspondence relationship between the ID codes and the wheels 22, 33, 36 in the memory unit 74. When finishing the process of step S16, the receiver controlling device 72 ends the wheel position identifying process. The receiver 71, which executes the wheel position identifying process in the above-described manner, is a wheel position identifying device. The wheel position identifying method is performed by the receiver controlling device 72 executing the wheel position identifying process.

Operation of the present embodiment will now be described.

When the transmitter controlling devices 57 transmit wireless signals at the specific positions based on detection results of the acceleration sensors 54, the specific position at which the first transmitter 51R transmits the wireless signal is displaced from the specific position at which the second transmitter 51L transmits the wireless signal. The receiver controlling device 72 obtains information indicating the rotation angle of the wheel assembly set 31 from the rotation angle detecting unit 41 each time the reception circuit 77 receives a wireless signal. Due to the displacement of the specific positions, rotation angles having a phase difference are obtained. The phase difference allows the receiver controlling device 72 to identify whether each transmitter 51 is provided in the right wheel assembly 32 or the left wheel assembly 35.

The present embodiment has the following advantages.
(1) The phase difference between the rotation angles in each wheel assembly set 31 allows the receiver controlling device 72 to identify whether each transmitter 51 is provided in the right wheel assembly 32 or the left wheel assembly 35. Thus, even though the vehicle 10 includes the wheel assembly sets 31, the transmitters 51 can be associated with the respective wheel assemblies 32, 35.
(2) The first transmitter 51R and the second transmitter 51L are inverted with respect to the left-right direction. Thus, the direction in which the detection axis 55 of the first transmitter 51R is tilted is opposite to the direction in which the detection axis 55 of the second transmitter 51L is tilted. Even if the first transmitter 51R and the second transmitter 51L have the same configuration, simply arranging the first transmitter 51R and the second transmitter 51L in opposite orientations displaces the specific position at which the first transmitter 51R transmits a wireless signal and the specific position at which the second transmitter 51L transmits a wireless signal from each other.
(3) The receiver 71 identifies whether each transmitter 51 is provided in the right wheel 33 or the left wheel 36 through the wheel position identifying method. Even though the vehicle 10 includes the wheel assembly sets 31, the transmitters 51 can be associated with the respective wheel assemblies 32, 35.

The above-described embodiment may be modified as follows. The above-described embodiment and the following modifications can be combined as long as the combined modifications remain technically consistent with each other.

If it is known which of the first position 12 to the fourth position 16 each transmitter 51 is provided in, the receiver controlling device 72 may perform the left-right wheel position identification without performing the position identification.

The first position 12 and the second position 13 may also be provided with wheel assembly sets 31. Even in this case, the method of the above-described embodiment allows the receiver controlling device 72 to identify which of the right wheel assembly 32 and the left wheel assembly 35 each transmitter 51 is provided in.

The first transmitter 51R and the second transmitter 51L provided in the same wheel assembly sets 31 may be separated from each other in the rotation direction of the wheel assemblies 32, 35. For example, the first transmitter 51R and the second transmitter 51L provided in the same wheel assembly sets 31 may be separated from each other by 180° in the rotation direction of the wheel assemblies 32, 35. In this case, a phase difference of 180° + 2θ occurs between the centers C1, C2 of the two groups G1, G2. The memory unit 74 may store an angle difference in the rotation direction of the wheel assemblies 32, 35 between the first transmitter 51R and the second transmitter 51L. The receiver controlling device 72 then subtracts the angle difference in the rotation direction of the wheel assemblies 32, 35 between the first transmitter 51R and the second transmitter 51L from the phase difference between the centers C1, C2 of the two groups G1, G2. The receiver controlling device 72 may determine whether the phase of each of the groups G1, G2 is advancing or retarding based on the value obtained through the subtraction. When the first transmitter 51R and the second transmitter 51L are separated from each other by 180°, the receiver controlling device 72 subtracts 180° from the phase difference. The obtained value in this case is 2θ. The receiver controlling device 72 determines whether the phase of each of the groups G1, G2 is advancing or retarding based on the value obtained by subtracting 180° from the phase difference as in the above-described embodiment. An example has been described in which the first transmitter 51R and the second transmitter 51L are separated from each other by 180°. However, the first transmitter 51R and the second transmitter 51L may be arranged at any angle difference of, for example, 270° or 300°.

The first transmitter 51R and the second transmitter 51L in the same wheel assembly set 31 may be arranged in any manner as long as the specific positions, at which wireless signals are transmitted, are displaced from each other.

The first transmitter 51R and the second transmitter 51L may have different configurations. In this case, the first transmitter 51R and the second transmitter 51L may have different deviation angles θ.

The acceleration sensor 54 may be a dual-axis acceleration sensor or a triple-axis acceleration sensor.

The transmitters 51 may be adhered to the tires 23, 34, 37. In this case, the transmitter 51 adhered to the right tire 34 is regarded as being provided in the right wheel assembly 32. The transmitter 51 bonded to the left tire 37 is regarded as being provided in the left wheel assembly 35.

The specific position may be a position at which the detection axis 55 is oriented vertically downward. In this case, when the detection result of the acceleration sensor 54 starts decreasing after increasing, the transmitter controlling device 57 determines that the transmitter 51 is at the specific position.

The transmitters 51 provided in the wheel assemblies 21 may be different from the transmitters 51 provided in the wheel assembly sets 31.

### REFERENCE SIGNS LIST

10...Vehicle; 31...Wheel Assembly Set; 32...Right Wheel Assembly; 35... Left Wheel Assembly; 41...Rotation Angle Detecting Unit; 50...Wheel Position Identifying System; 51...Transmitter; 54...Acceleration Sensor; 55...Detection Axis; 57...Transmitter Controlling Device; 59...Transmitter Memory Unit; 60...Transmission Circuit; 71...Receiver as Wheel Position Identifying Device 72...Receiver Controlling Device; 77... Reception Circuit

## Claims

1. A wheel position identifying system, comprising:
transmitters respectively provided in two wheel assemblies in a wheel assembly set of a vehicle; and
a wheel position identifying device that is configured to identify whether each of the transmitters is provided in a right wheel assembly or a left wheel assembly of the two wheel assemblies, wherein
each of the transmitters includes:
an acceleration sensor that includes a detection axis and is configured to detect an acceleration in a direction along the detection axis;
a transmitter memory unit that is configured to store an ID code;
a transmission circuit that is configured to transmit a wireless signal containing the ID code to the wheel position identifying device; and
a transmitter controlling device that is configured to cause the transmission circuit to transmit the wireless signal when detecting that the transmitter is located at a specific position in a rotation direction of the wheel assembly based on a detection result of the acceleration sensor,
when the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction,
the wheel position identifying device includes:
a reception circuit that is configured to receive the wireless signals; and
a receiver controlling device that is configured such that
each time the reception circuit receives the wireless signal, the receiver controlling device obtains information indicating a rotation angle of the wheel assembly set from a rotation angle detecting unit of the vehicle, while associating the information with the ID code included in the received wireless signal, and
the receiver controlling device identifies whether each of the transmitters is provided in the right wheel assembly or the left wheel assembly based on a phase difference between the rotation angles associated with the ID codes that are different from each other.

2. The wheel position identifying system according to claim 1, wherein the transmitter provided in the right wheel assembly and the transmitter provided in the left wheel assembly are inverted with respect to a left-right direction of the vehicle.

3. A wheel position identifying device for a vehicle, the vehicle including a wheel assembly set that includes two wheel assemblies, each of the two wheel assemblies being provided with a transmitter, wherein
the wheel position identifying device is configured to identify whether each of the transmitters is provided in a right wheel assembly or a left wheel assembly of the two wheel assemblies,
each of the transmitters includes an acceleration sensor that is configured to detect an acceleration in a direction along a detection axis,
when the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction,
the wheel position identifying device comprises:
a reception circuit that is configured to receive wireless signals, the wireless signals being transmitted from the transmitters and including ID codes; and
a receiver controlling device that is configured such that
each time receiving the wireless signal that is transmitted from each transmitter when the transmitter detects that the transmitter is located at a specific position in a rotation direction of the wheel assembly, the receiver controlling device obtains information indicating a rotation angle of the wheel assembly set from a rotation angle detecting unit of the vehicle, while associating the information with the ID code included in the received wireless signal, and
the receiver controlling device identifies whether each of the transmitters is provided in the right wheel assembly or the left wheel assembly based on a phase difference between the rotation angles associated with the ID codes that are different from each other.

4. A wheel position identifying method for a vehicle, the vehicle including a wheel assembly set that includes two wheel assemblies, each of the two wheel assemblies being provided with a transmitter, wherein the wheel position identifying method identifies whether each of the transmitters is provided in a right wheel assembly or a left wheel assembly of the two wheel assemblies, the method comprising:
providing each of the transmitters with an acceleration sensor that is configured to detect an acceleration in a direction along a detection axis;
arranging the transmitters in the two wheel assemblies, respectively, such that, when the transmitter provided in the right wheel assembly and the transmitter provided in the left wheel assembly are at a same position in the rotation direction of the wheel assemblies, the detection axis of the transmitter provided in the right wheel assembly and the detection axis of the transmitter provided in the left wheel assembly are separated from each other in the rotation direction;
when the transmitter detects that the transmitter is located at a specific position in a rotation direction of the wheel assembly, causing the transmitter to transmit a wireless signal including the ID code;
receiving the wireless signal;
each time receiving the wireless signal, obtaining information indicating a rotation angle of the wheel assembly set from a rotation angle detecting unit of the vehicle, while associating the information with the ID code included in the received wireless signal; and
identifying whether each of the transmitters is provided in the right wheel assembly or the left wheel assembly based on a phase difference between the rotation angles associated with the ID codes that are different from each other.
